# EUROPÄISCHE PATENTANMELDUNG

(11) **EP 4 563 406 A1**
(43) Veröffentlichungstag der Anmeldung: **04.06.2025**
(21) Anmeldenummer: 23213734.9
(22) Anmeldetag: 01.12.2023
(51) Int. Cl.: B60N 2/06, B60N 2/02

(54) **LÄNGSVERSTELLEINRICHTUNG UND FAHRZEUGSITZ**

(71) Anmelder: Adient US LLC, Plymouth, MI 48170 (US)
(72) Erfinder: QUAST, Ingo, 40477 Duesseldorf (DE); SPRENGER, Erik, 42929 Wermelskirchen (DE); HEEG, Norbert, 66994 Dahn (DE)
(74) Vertreter: Liedtke & Partner Patentanwälte

(57) **Zusammenfassung**

Die Erfindung betrifft eine Längsverstelleinrichtung (110) für einen Fahrzeugsitz (100), wobei die Längsverstelleinrichtung (110) mindestens eine Schienenanordnung (112) mit zwei Schienenpaaren (112.1, 112.2) umfasst, wobei das jeweilige Schienenpaar (112.1, 112.2) ein erstes Schienenelement (114) und ein zweites Schienenelement (116) aufweist, welche relativ zueinander beweglich sind. Die Längsverstelleinrichtung (110) umfasst des Weiteren eine Motoreinheit (120) sowie eine Motorhalterung (122) mit einem Motoraufnahmeabschnitt (122.1) für die Motoreinheit (120) und mindestens einem Wellenaufnahmeabschnitt (122.2) für mindestens eine von der Motoreinheit (120) abgehende Welle (126), wobei zwischen der Motorhalterung (122) und der Motoreinheit (120), zwischen der Motorhalterung (122) und der Welle (126) und/oder zwischen der Motorhalterung (122) und einem beweglichen Schienenelement (114) jeweils mindestens ein Entkopplungselement (130) vorgesehen ist.

## Beschreibung

Die Erfindung betrifft eine Längsverstelleinrichtung sowie einen Fahrzeugsitz mit einer solchen Längsverstelleinrichtung.

### Stand der Technik

Längsverstelleinrichtungen der eingangs genannten Art werden an Fahrzeugsitzen dazu verwendet, um den Fahrzeugsitz, zum Beispiel mittels einer Schienenanordnung, zu verstellen, insbesondere gegenüber einem Fahrzeugboden in Längsachsenrichtung des Fahrzeugs an verschiedene Längssitzpositionen zu stellen. Dazu umfasst die Längsverstelleinrichtung als Antriebseinheit üblicherweise eine Motoreinheit, welche mittels einer Halterung an dem Fahrzeugsitz gehalten ist. Die Motoreinheit ist wiederum mit der Schienenanordnung bewegungsgekoppelt. Die Halterung kann beispielsweise an einer beweglichen Schiene der Schienenanordnung, insbesondere an einer Oberschiene, befestigt sein und ermöglicht so eine Lagesicherung der Antriebseinheit und/oder einer von dieser abgehenden Welle, insbesondere einer Antriebswelle, so dass diese zuverlässig mit der Schienenanordnung der Längsverstelleinrichtung verbunden ist/sind.

### Aufgabe

Der Erfindung liegt die Aufgabe zu Grunde, eine Längsverstelleinrichtung der eingangs genannten Art zu verbessern, insbesondere eine besonders geräuscharme Längsverstelleinrichtung sowie einen entsprechenden Fahrzeugsitz bereitzustellen.

### Lösung

Die erstgenannte Aufgabe wird erfindungsgemäß gelöst durch eine Längsverstelleinrichtung mit den Merkmalen des Anspruchs 1. Die zweitgenannte Aufgabe wird erfindungsgemäß durch einen Fahrzeugsitz mit den Merkmalen des Anspruchs 10 gelöst.

Vorteilhafte Ausgestaltungen, welche einzeln oder in Kombination miteinander eingesetzt werden können, sind Gegenstand der Unteransprüche.

Die erfindungsgemäße Längsverstelleinrichtung umfasst zumindest eine Schienenanordnung mit zwei Schienenpaaren, wobei das jeweilige Schienenpaar ein erstes Schienenelement und ein zweites Schienenelement, welche relativ zueinander beweglich sind, aufweist. Die Längsverstelleinrichtung umfasst darüber hinaus eine Motoreinheit zum Antrieb der Schienenanordnung und eine Motorhalterung mit einem Motoraufnahmeabschnitt für die Motoreinheit und mindestens einem Wellenaufnahmeabschnitt für mindestens eine von der Motoreinheit abgehende Welle, insbesondere eine Antriebswelle, wobei zwischen der Motorhalterung und der Motoreinheit, zwischen der Motorhalterung und der Welle und/oder zwischen der Motorhalterung und einem beweglichen Schienenelement jeweils mindestens ein Entkopplungselement vorgesehen ist.

Dadurch, dass zwischen der Motorhalterung und der Motoreinheit, zwischen der Motorhalterung und der Welle und/oder zwischen der Motorhalterung und einem beweglichen Schienenelement jeweils mindestens ein Entkopplungselement vorgesehen ist, ist eine Körperschallweiterleitung zwischen diesen genannten Komponenten gehemmt. Hierdurch ist eine deutliche Geräuschreduzierung der Längsverstelleinrichtung ermöglicht. Insbesondere stellt/en das oder die Entkopplungselemente sicher, dass die Motoreinheit als Geräuschquelle entkoppelt ist. Der Erfindung liegt zudem die Idee zugrunde, von beweglichen Teilen, wie zum Beispiel der Motoreinheit, der Welle und/oder dem beweglichen Schienenelement der Längsverstelleinrichtung, ausgehende Schwingungen zu reduzieren und insbesondere eine Übertragung oder Weiterleitung dieser Schwingungen auf angrenzende oder benachbarte Komponenten oder Teile der Längsverstelleinrichtung zu reduzieren oder zu verhindern. Hierdurch kann sichergestellt werden, dass diese Schwingungen nicht auf Teile mit einer Eigenfrequenz im Bereich einer Anregungsfrequenz treffen, so dass störende Geräusche unterdrückt werden können oder sind.

Die Motorhalterung kann beispielsweise als eine längliche Motorbrücke ausgebildet sein. Die Motorhalterung kann sich beispielsweise zwischen den zwei Schienenpaaren erstrecken und diese verbinden. Der Motoraufnahmeabschnitt kann beispielsweise als eine einseitig offene halb-zylindrische Ausnehmung, insbesondere rechteckförmige Ausnehmung, ausgebildet sein, in welche die Motoreinheit, insbesondere ein Elektromotor, einsetzbar ist.

Der Wellenaufnahmeabschnitt grenzt einseitig oder beidseitig an den Motoraufnahmeabschnitt an und erstreckt sich jeweils bis zu dem Schienenpaar. Der Wellenaufnahmeabschnitt kann beispielsweise kanalförmig zur Aufnahme der Welle ausgebildet sein. Die Welle kann darüber hinaus in einem Hüllrohr angeordnet und geführt rotieren. Dieses Hüllrohr kann beispielsweise über die Entkopplungselemente gegenüber der Motorhalterung akustisch isoliert sein.

Beispielsweise kann das mindestens eine Entkopplungselement zumindest abschnittsweise als ein nachgiebiges, insbesondere ein elastisches, Lagerelement ausgebildet sein. Zum Beispiel kann das mindestens eine Entkopplungselement zumindest abschnittsweise als ein dämpfendes, insbesondere schwingungsdämpfendes, Element ausgebildet sein.

Das mindestens eine Entkopplungselement kann beispielsweise wenigstens einen Führungsabschnitt und einen Entkopplungsabschnitt aufweisen. Der Führungsabschnitt kann beispielsweise als ein Führungsprofil oder ein Führungsrohr ausgebildet sein.

Es können mehrere Entkopplungselemente vorgesehen sein. Beispielsweise kann für die Motoreinheit je Längsende ein Motorentkopplungselement vorgesehen sein. Das jeweilige Motorentkopplungselement kann eingerichtet sein, die Motoreinheit radial und/oder axial gegenüber der Motorhalterung, insbesondere der Motorbrücke, zu entkoppeln, insbesondere akustisch zu entkoppeln.

Für die Welle können mehrere identische Wellenentkopplungselemente vorgesehen sein. Die mehreren Wellenentkopplungselemente können beispielsweise eingerichtet sein, dass diese axial miteinander formschlüssig und/oder kraftschlüssig verbunden oder verbindbar sind. Die mehreren Wellenentkopplungselemente sind Gleichteile und entkoppeln die Welle radial und/oder axial gegenüber der Motorhalterung, insbesondere akustisch.

Für die Schienenanordnung kann mindestens ein Schienenentkopplungselement vorgesehen sein. Das Schienenentkopplungselement kann eingerichtet sein, die bewegliche Schiene gegenüber der Motorhalterung, insbesondere der Motorbrücke, zu entkoppeln, insbesondere akustisch zu entkoppeln.

Der Entkopplungsabschnitt kann als ein nachgiebiger Flansch ausgebildet sein. Beispielsweise kann der nachgiebige Flansch als eine rechtwinklig vom Führungsabschnitt abstehende Kante ausgebildet sein. Der nachgiebige Flansch kann sowohl zur Verbindung als auch zur Entkopplung eingerichtet sein. Insbesondere dient der nachgiebige Flansch der Verbindung zu einem angrenzenden Bauteil, insbesondere einem weiteren Entkopplungselement und/oder der Motorhalterung. Bei mehreren gleichartigen Entkopplungselementen können diese axial über den Flansch miteinander verbunden sein, zum Beispiel bündig aneinanderstoßen, insbesondere optional bereichsweise ineinandergesteckt sein.

Zumindest der Entkopplungsabschnitt kann aus einem elastischen Material, insbesondere einem elastischen Kunststoff, insbesondere einem Elastomer oder Gummi, gebildet sein. Bevorzugt ist das jeweilige Entkopplungselement aus einem elastischen Material, welches hinreichend fest und stabil zur Aufnahme und Führung der aufzunehmenden Komponente, insbesondere der Motoreinheit, der Welle und/oder der beweglichen Schiene, gebildet.

Wie zuvor beschrieben, ist/sind mindestens eines der Entkopplungselemente als ein Motorentkopplungselement, mindestens eines der Entkopplungselemente als ein Wellenentkopplungselement und/oder mindestens eines der Entkopplungselemente als ein Schienenentkopplungselement ausgebildet. Das Wellenentkopplungselement kann beispielsweise als ein indirektes Entkopplungselement für die Welle ausgebildet sein. Insbesondere ist das Wellenentkopplungselement als ein Rohrentkopplungselement ausgebildet, welches ein um die Welle angeordnetes Hüllrohr oder Führungsrohr akustisch entkoppelt.

Insbesondere können das Motorentkopplungselement, das Wellenentkopplungselemente und das Schienenentkopplungselement voneinander entkoppelt sein. Mit anderen Worten: Die Entkopplungselemente der verschiedenen Komponenten stehen mit ihren Enden nicht in Verbindung. Insbesondere steht das Wellenentkopplungselement nicht in Verbindung mit dem Motorentkopplungselement oder dem Schienenentkopplungselement. Umgekehrt steht das Motorentkopplungselement nicht in Verbindung mit dem Wellenentkopplungselement. Auch steht das Schienenentkopplungselement nicht in Verbindung mit dem Wellenentkopplungselement.

Die Anzahl der Entkopplungselemente kann variieren. Beispielweise kann die Anzahl der Entkopplungselemente in Abhängigkeit von Wellenlänge und/oder der Motorlänge variieren. Auch kann ein gebogener Verlauf des Wellenaufnahmeabschnitts zusätzliche Entkopplungselemente erfordern.

Zusammenfassend und mit anderen Worten ausgedrückt ist durch die Erfindung eine Längsverstelleinrichtung bereitgestellt, bei welchem die Geräuschquelle, der Motor, akustisch entkoppelbar ist. Darüber hinaus sind auch alle von anderen beweglichen Teilen, wie der Welle und des beweglichen Schienenelements, ausgehenden Schwingungen reduzierbar durch die Integration von Entkopplungselementen, wie den Wellenentkopplungselementen und/oder den Schienenentkopplungselementen. Jedes zuvor beschriebene Entkopplungselement kann die Lautheit in einem spezifischen Fahrzeugsitz um circa 0,5 Sone (Sone = ein Maß für die wahrgenommene Lautstärke, wobei ein Sinuston von 1 kHz und mit einem Schallpegel von 40 dB genau einem Sone entspricht) gegenüber Fahrzeugsitzen herkömmlicher Bauweise ohne mehrfache Entkopplungselemente oder ohne die hier beschriebene Kombination von verschiedenen Entkopplungselementen, insbesondere die Kombination von Motorentkopplungselementen, Wellenentkopplungselementen und Schienenentkopplungselementen, reduziert werden.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: in schematischer Darstellung einen Fahrzeugsitz mit einer Längsverstelleinrichtung nach dem Stand der Technik,
- Fig. 2:: eine perspektivische Ansicht einer erfindungsgemäßen Längsverstelleinrichtung,
- Fig. 3:: einen vergrößerten Ausschnitt im Bereich eines Motoraufnahmeabschnitts einer Motorhalterung der Längsverstelleinrichtung gemäß Figur 2 und in Explosionsdarstellung zwei Entkopplungselemente,
- Fig. 4:: die Darstellung gemäß Figur 3 mit eingebauten Entkopplungselementen,
- Fig. 5:: einen vergrößerten Ausschnitt im Bereich eines Wellenaufnahmeabschnitts einer Motorhalterung der Längsverstelleinrichtung gemäß Figur 2,
- Fig. 6:: den Wellenaufnahmeabschnitt gemäß Figur 2 in einer Ansicht von der Seite und schräg von oben,
- Fig. 7:: einen vergrößerten Ausschnitt eines Befestigungsflansches zur Befestigung an einer Motoreinheit,
- Fig. 8:: einen vergrößerten Ausschnitt im Bereich eines als Hüllrohrentkopplung ausgebildeten Wellenentkopplungselements,
- Fig. 9:: in perspektivischer Schnittdarstellung ein Schienenpaar im Bereich eines Schienenentkopplungselements, und
- Fig. 10:: in vergrößerter perspektivischer Schnittdarstellung das Schienenentkopplungselement nach Figur 9.

Einander entsprechende Teile sind in allen Figuren mit den gleichen Bezugszeichen versehen.

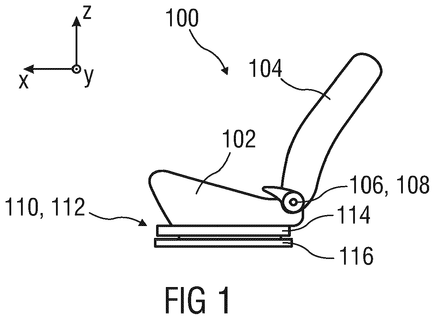

Ein in der Figur 1 zum Stand der Technik schematisch dargestellter Fahrzeugsitz 100 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 100 weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 100 verläuft die Vertikalrichtung z vorzugsweise parallel zu einer Fahrzeughochachse.

Die verwendeten Positionsangaben und Richtungsangaben, wie beispielsweise vorne, hinten, oben und unten beziehen sich auf eine Blickrichtung eines im Fahrzeugsitz 100 sitzenden Insassen in normaler Sitzposition, wobei der Fahrzeugsitz 100 im Fahrzeug eingebaut, in einer zur Personenbeförderung geeigneten Gebrauchsposition mit aufrecht stehender Rückenlehne 104 und wie üblich in Fahrtrichtung ausgerichtet ist. Der Fahrzeugsitz 100 kann jedoch auch in abweichender Ausrichtung, beispielsweise quer zur Fahrtrichtung, verbaut oder bewegt werden. Soweit nicht abweichend beschrieben, ist der Fahrzeugsitz 100 spiegelsymmetrisch zu einer senkrecht zur Querrichtung y verlaufenden Ebene aufgebaut.

Die Rückenlehne 104 kann schwenkbar an einem Sitzteil 102 des Fahrzeugsitzes 100 angeordnet sein. Hierzu kann der Fahrzeugsitz 100 optional einen Beschlag 106, insbesondere einen Einstellbeschlag, Drehbeschlag, Rastbeschlag oder Taumelbeschlag, umfassen.

Die verwendeten Positionsangaben und Richtungsangaben, wie beispielsweise radial, axial und in Umfangsrichtung, beziehen sich auf eine Drehachse 108 des Beschlags 106. Radial bedeutet senkrecht zu der Drehachse 108. Axial bedeutet in Richtung oder parallel zu der Drehachse 108.

Der Fahrzeugsitz 100 kann optional eine Längsverstelleinrichtung 110 umfassen. Die Längsverstelleinrichtung 110 umfasst beispielsweise eine Schienenanordnung 112 mit einem ersten Schienenelement 114 und einem zweiten Schienenelement 116. Das erste Schienenelement 114 ist relativ in Längsrichtung x zum zweiten Schienenelement 116 verstellbar. Das erste Schienenelement 114 ist an dem Sitzteil 102 befestigt. Das zweite Schienenelement 116 ist an einem Strukturelement eines Fahrzeugs, zum Beispiel einem Fahrzeugboden, befestigt.

Zur besseren Übersichtlichkeit wird das erste Schienenelement 114 in der nachfolgenden Beschreibung als Oberschiene 114 bezeichnet. Diese Oberschiene 114 (auch Laufschiene oder Schlitten genannt) ist dem Fahrzeugsitz 100 zugeordnet und eingerichtet, diesen Fahrzeugsitz 100 zu tragen. Das zweite Schienenelement 116 wird im Weiteren als Unterschiene 116 bezeichnet. Die Unterschiene 116 ist fest und beispielsweise mit dem Boden eines Fahrzeuges verbunden.

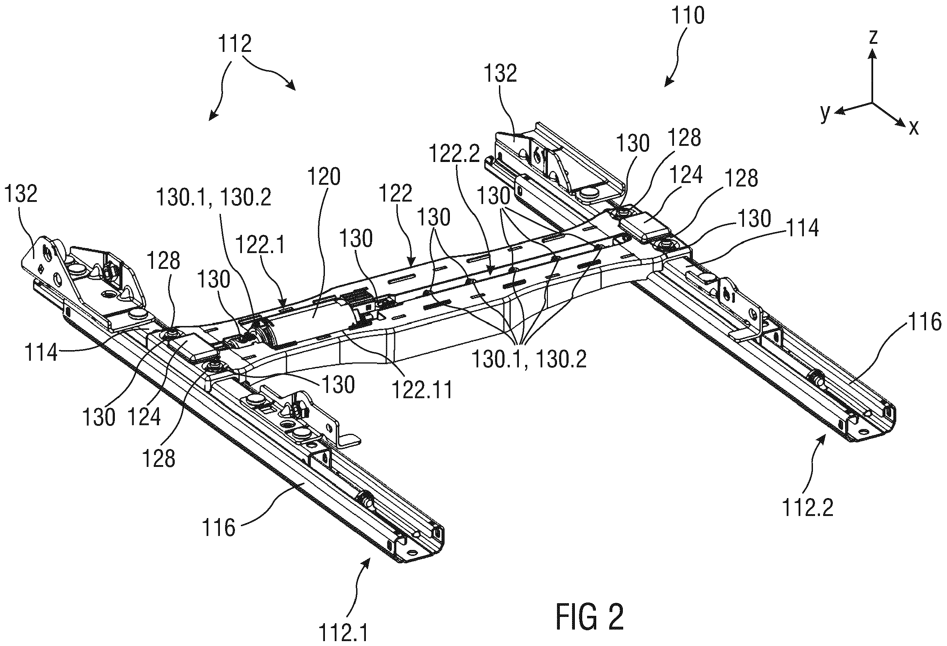

Figur 2 zeigt eine perspektivische Ansicht der erfindungsgemäßen Längsverstelleinrichtung 110.

Die erfindungsgemäße Längsverstelleinrichtung 110 umfasst zumindest die Schienenanordnung 112 mit zwei Schienenpaaren 112.1, 112.2. Das jeweilige Schienenpaar 112.1, 112.2 umfasst als erstes Schienenelement 114 die Oberschiene 114 und als zweites Schienenelement 116 die Unterschiene 116. Die jeweilige Oberschiene 114 ist längsbeweglich zu der Unterschiene 116 bewegbar.

Die Längsverstelleinrichtung 110 umfasst darüber hinaus zur elektromotorischen Verstellung der Oberschiene 114 eine Motoreinheit 120, insbesondere einen Elektromotor, und eine Motorhalterung 122 für die Motoreinheit 120.

Zur Kopplung der Motoreinheit 120 mit der Schienenanordnung 112 ist je Schienenpaar 112.1, 112.2 eine Getriebeeinheit 124 vorgesehen, die die Motoreinheit 120 und die bewegliche Oberschiene 114 zumindest eines der Schienenpaare 112.1, 112.2 miteinander koppelt.

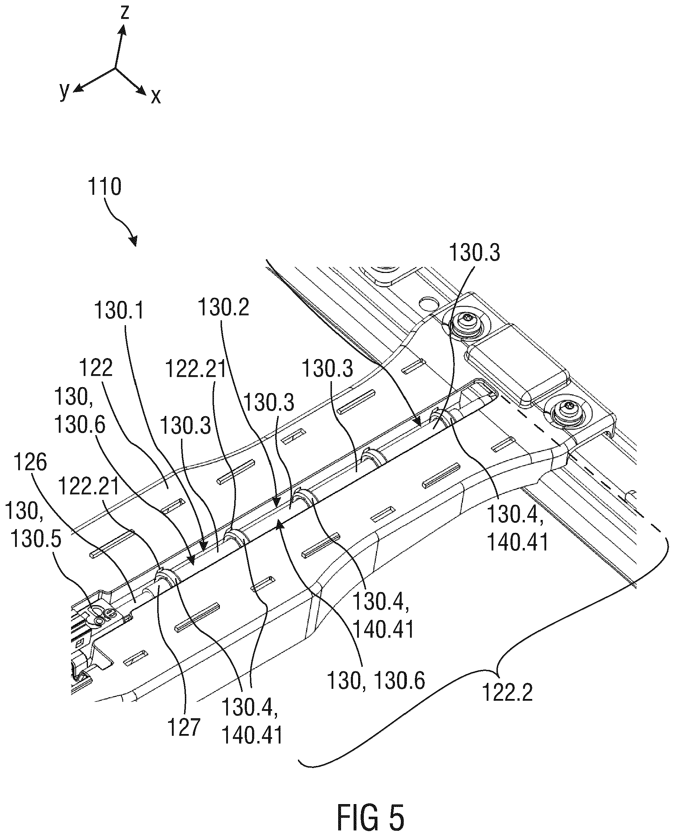

Die Motorhalterung 122 weist zumindest einen Motoraufnahmeabschnitt 122.1 für die Motoreinheit 120 und mindestens einen Wellenaufnahmeabschnitt 122.2 für mindestens eine von der Motoreinheit 120 abgehende Welle 126, insbesondere eine Antriebswelle (dargestellt in Figur 5) auf. Die Welle 126 ist insbesondere eine flexible Welle, die in einem Hüllrohr 127 (auch Führungsrohr genannt) geführt ist.

Die Motorhalterung 122 ist an Befestigungspunkten 128 mittels Befestigungselementen 128.1, zum Beispiel Schrauben, an der Oberschiene 114 befestigt.

Zwischen der Motorhalterung 122 und der Motoreinheit 120, zwischen der Motorhalterung 122 und der Welle 126, insbesondere dem Hüllrohr 127, und/oder zwischen der Motorhalterung 122 und der beweglichen Oberschiene 114 ist jeweils mindestens ein Entkopplungselement 130 angeordnet. Mit anderen Worten: Die Längsverstelleinrichtung 110 umfasst eine Kombination von mehreren Entkopplungselementen 130.

Das jeweilige Entkopplungselement 130 kann zumindest abschnittsweise als ein nachgiebiges, insbesondere ein elastisches, Lagerelement 130.1 ausgebildet sein. Zum Beispiel kann das mindestens eine Entkopplungselement 130 zumindest abschnittsweise als ein dämpfendes, insbesondere schwingungsdämpfendes, Element 130.2 ausgebildet sein.

Mittels der Entkopplungselemente 130, insbesondere der nachgiebigen Lagerelemente 130.1 und/oder der dämpfenden Elemente 130.2, ist eine Körperschallweiterleitung zwischen den genannten Komponenten, insbesondere zwischen der Motorhalterung 122 und der Motoreinheit 120, zwischen der Motorhalterung 122 und der Welle 126 und/oder zwischen der Motorhalterung 122 und der beweglichen Oberschiene 114, gehemmt.

Die Motorhalterung 122 ist beispielsweise als eine längliche Motorbrücke oder ein Motorträgerprofil ausgebildet. Die Motorhalterung 122 erstreckt sich beispielsweise zwischen den zwei Schienenpaaren 112.1, 112.2 und verbindet diese. Über Sitzhalterungen 132 ist die Längsverstelleinrichtung 110 an dem Fahrzeugsitz 100 (dargestellt in Figur 1) befestigt.

Der Motoraufnahmeabschnitt 122.1 kann beispielsweise als eine einseitig offene halb-zylindrische Ausnehmung 122.11 ausgebildet sein. Beispielsweise ist die Ausnehmung 122.11 entsprechend der Kontur und Außenform der Motoreinheit 120 ausgebildet. Die Ausnehmung 122.11 kann rechteckförmig ausgebildet sein. In die Ausnehmung 122.11 ist die Motoreinheit 120, insbesondere ein Elektromotor, einsetzbar. Die Ausnehmung 122.11 ist derart ausgebildet, dass die Motoreinheit 120 formschlüssig und/oder kraftschlüssig in dieser Ausnehmung 122.11 lösbar gehalten ist.

Der Wellenaufnahmeabschnitt 122.2 grenzt einseitig oder beidseitig an den Motoraufnahmeabschnitt 122.1 an und erstreckt sich jeweils bis zu dem Schienenpaar 112.1, 112.2. Der Wellenaufnahmeabschnitt 122.2 kann beispielsweise kanalförmig zur Aufnahme der Welle 126 (dargestellt in Figur 5) ausgebildet sein, die in dem Hüllrohr 127 geführt ist.

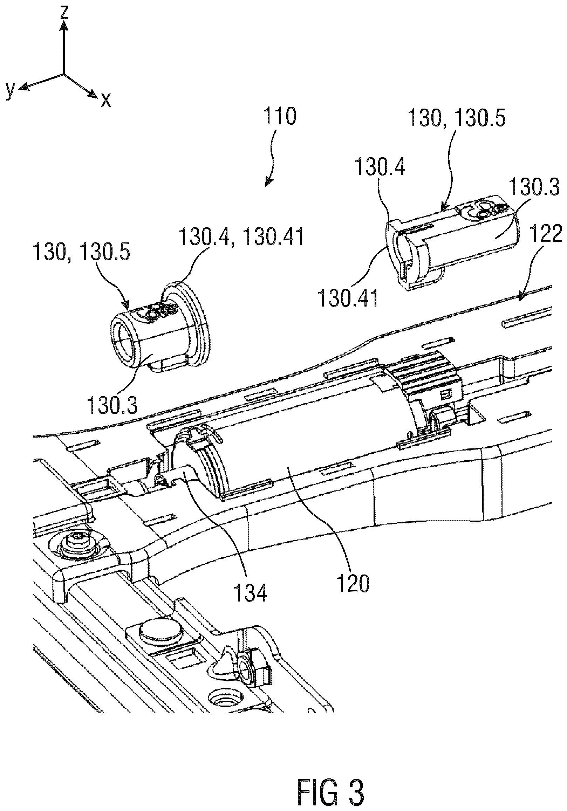

Figur 3 zeigt einen vergrößerten Ausschnitt im Bereich des Motoraufnahmeabschnitts 122.1 der Motorhalterung 122 der Längsverstelleinrichtung 110 gemäß Figur 2 und in Explosionsdarstellung zwei Entkopplungselemente 130.

Das jeweilige Entkopplungselement 130 kann beispielsweise wenigstens einen Führungsabschnitt 130.3 und einen Entkopplungsabschnitt 130.4 aufweisen.

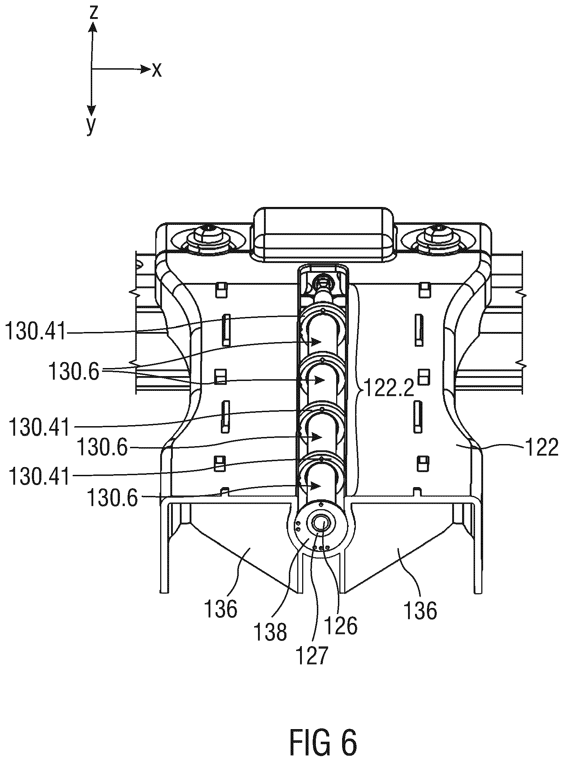

Der Führungsabschnitt 130.3 kann beispielsweise als ein Führungsprofil oder ein Führungsrohr, Hüllrohr oder dergleichen ausgebildet sein. Der Führungsabschnitt 130.3 ist ausgebildet, um beispielsweise ein Motorende 134 oder die von der Motoreinheit 120 abgehende Welle 126 (dargestellt in Figur 6) aufzunehmen. Hierzu kann der Führungsabschnitt 130.3 als eine Durchgangsöffnung ausgebildet sein.

Die Entkopplungselemente 130 sind je Längsende der Motoreinheit 120 vorgesehen und als Motorentkopplungselemente 130.5 ausgebildet. Das jeweilige Motorentkopplungselement 130.5 kann beispielsweise eingerichtet sein, die Motoreinheit 120 radial und/oder axial, insbesondere in Querrichtung y, gegenüber der Motorhalterung 122, insbesondere der Motorbrücke, zu entkoppeln, insbesondere akustisch zu entkoppeln.

Zumindest der als Flansch 130.41 ausgebildete Entkopplungsabschnitt 130.4 kann aus einem elastischen Material, insbesondere einem elastischen Kunststoff, zum Beispiel einem Elastomer oder Gummi, gebildet sein. Bevorzugt ist das jeweilige Entkopplungselement 130, auch wie nachfolgend beschrieben, vollständig aus einem elastischen Material gebildet, welches hinreichend fest und stabil zur Aufnahme und Führung der aufzunehmenden Komponente, insbesondere der Motoreinheit 120, der Welle 126 und/oder der beweglichen Oberschiene 114, ausgebildet ist.

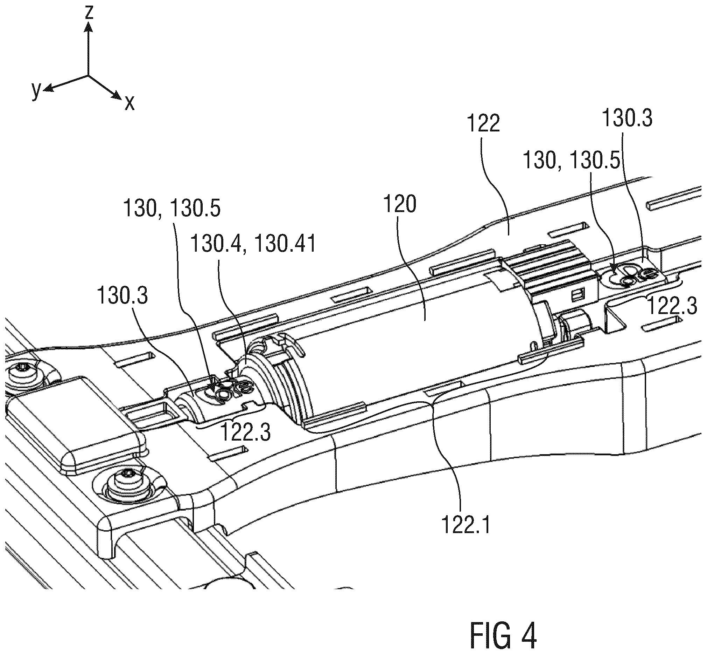

Figur 4 zeigt die Darstellung gemäß Figur 3 mit eingebauten als Motorentkopplungselemente 130.5 ausgebildeten Entkopplungselementen 130. Die Motoreinheit 120 ist in dem Motoraufnahmeabschnitt 122.1 formschlüssig und/oder kraftschlüssig angeordnet und lösbar gehalten.

In Übergangsabschnitten 122.3 ist jeweils eines der Motorentkopplungselemente 130.5 angeordnet. Der Entkopplungsabschnitt 130.4 des jeweiligen Motorentkopplungselements 130.5 ist beispielsweise als ein Flansch 130.41 ausgebildet. Der Entkopplungsabschnitt 130.4 ist insbesondere als ein nachgiebiger Flansch 130.41 ausgebildet.

Der Flansch 130.41 kann beispielsweise als eine rechtwinklig vom Führungsabschnitt 130.3 abstehende Kante ausgebildet sein. Der Führungsabschnitt 130.3 kann eine an die Motorhalterung 122 angepasste Außenform, insbesondere eine runde oder eckige oder abschnittsweise runde und abschnittsweise gerade Außenform, aufweisen.

Der nachgiebige Flansch 130.41 kann sowohl zur Verbindung mit der Motoreinheit 120 als auch zur akustischen Entkopplung der Motoreinheit 120 von der Motorhalterung 122 eingerichtet sein.

Figur 5 zeigt einen vergrößerten Ausschnitt im Bereich des Wellenaufnahmeabschnitts 122.2 der Motorhalterung 122 der Längsverstelleinrichtung 110 gemäß Figur 2.

Die Welle 126 ist als flexible Welle ausgebildet und über das Motorentkopplungselement 130.5 mit einem nicht näher dargestellten Abtriebselement der Motoreinheit 120 gekoppelt.

Für die Welle 126 können mehrere als Wellenentkopplungselemente 130.6 ausgebildete Entkopplungselemente 130 vorgesehen sein. Die mehreren Wellenentkopplungselemente 130.6 können beispielsweise eingerichtet sein, dass diese axial miteinander formschlüssig und/oder kraftschlüssig und lösbar verbunden sind. Die mehreren Wellenentkopplungselemente 130.6 sind Gleichteile oder identisch ausgebildet. Die Wellenentkopplungselemente 130.6, insbesondere deren als nachgiebiger Flansch 130.41 ausgebildete Entkopplungsabschnitte 130.4, entkoppeln die Welle 126 radial und/oder axial gegenüber der Motorhalterung 122, insbesondere akustisch.

Die mehreren gleichartigen Wellenentkopplungselemente 130.6 können axial über die nachgiebigen Flansche 130.41 miteinander verbunden sein. Zum Beispiel stößt der jeweilige Flansch 130.41 des einen Entkopplungselements 130 mit einem stirnseitigen Ende des Führungsabschnitts 130.3 eines benachbarten Entkopplungselements 130 bündig aneinander und/oder diese sind bereichsweise ineinandergesteckt.

Der Wellenaufnahmeabschnitt 122.2 weist Flanschaufnahmen 122.21 auf, die mit den Flanschen 130.41 korrespondieren. Die Flansche 130.41 sind formschlüssig und/oder kraftschlüssig in den Flanschaufnahmen 122.21 angeordnet und lösbar gehalten.

Der oder die Führungsabschnitte 130.3 der Wellenentkopplungselemente 130.6 können das Hüllrohr 127 für die Welle 126 bilden, beispielsweise als ein einteiliges oder mehrteiliges Führungsrohr. Dabei können die Entkopplungsabschnitte 130.4 als separate, insbesondere ringförmige, Dämpfungselemente auf dem Hüllrohr 127 in gleichmäßigen Abständen angeordnet sein. Das Hüllrohr 127 und/oder die endseitigen Führungsabschnitte 130.3 sind mittels der als Flansche 130.41 ausgebildeten Entkopplungsabschnitte 130.4 bezüglich der Motorbrücke oder Motorhalterung 122 entkoppelt.

Figur 6 zeigt den Wellenaufnahmeabschnitt 122.2 gemäß Figur 2 in einer Ansicht von der Seite und schräg von oben. Die Wellenentkopplungselemente 130.6 sind jeweils beispielsweise als Hüllrohr 127 (auch Führungsrohr oder Führungshülse genannt) zur Aufnahme, Führung sowie Lagerung der Welle 126 ausgebildet. Die Welle 126 kann insbesondere eine sogenannte Flexwelle, sein.

Die Motorhalterung 122 ist als ein Profilkörper, insbesondere eine Motorbrücke, ausgebildet. Die Motorhalterung 122 ist beispielsweise als ein U-förmiges Profil mit Versteifungselementen 136, zum Beispiel Rippen, ausgebildet.

Der Wellenaufnahmeabschnitt 122.2 ist als ein halboffener Kanal ausgebildet, in welchem die Wellenentkopplungselemente 130.6 angeordnet sind, in welchen wiederum die Welle 126 geführt und drehbar gelagert ist. Mittels der Flansche 130.41 ist die Welle 126 akustisch gegenüber der Motorhalterung 122 entkoppelt.

In Richtung der Motoreinheit 120 ist am Ende des der Motoreinheit 120 zugewandten Wellenentkopplungselements 130.6 ein Befestigungsflansch 138 zur Befestigung an der Motoreinheit 120 vorgesehen.

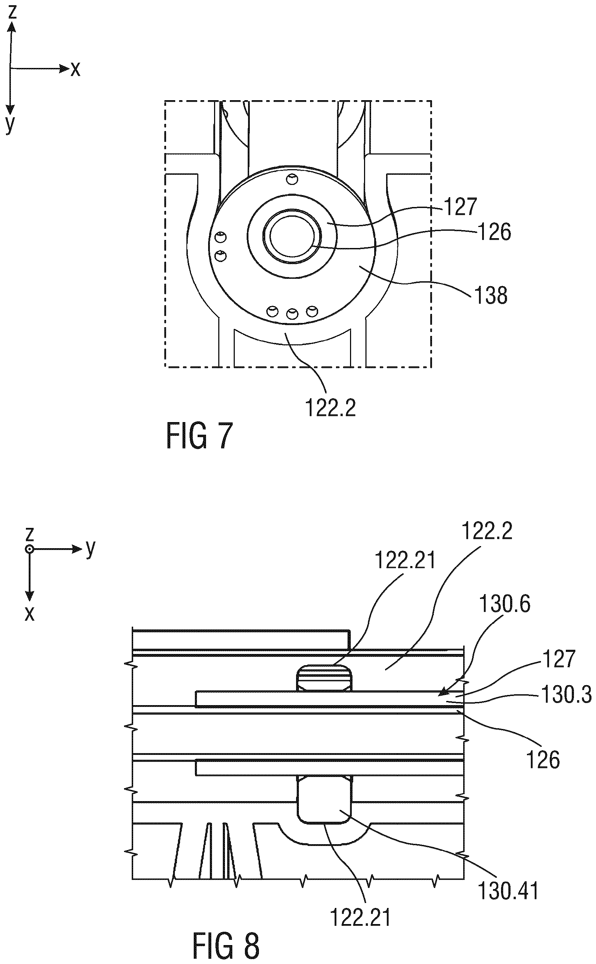

Figur 7 zeigt einen vergrößerten Ausschnitt des Befestigungsflansches 138. Der Befestigungsflansch 138 weist eine Außenform auf, die mit der Form des kanalförmigen Wellenaufnahmeabschnitts 122.2 korrespondiert.

Figur 8 zeigt einen vergrößerten Ausschnitt im Bereich des Wellenentkopplungselements 130.6. Der Flansch 130.41 ist in der Flanschaufnahme 122.21 des Wellenaufnahmeabschnitts 122.2 formschlüssig und/oder kraftschlüssig lösbar gehalten.

Der Führungsabschnitt 130.3 ist kanalförmig ausgebildet. Der Führungsabschnitt 130.3 weist insbesondere Innenabmessungen auf, die mit Außenabmessungen der Welle 126 korrespondieren.

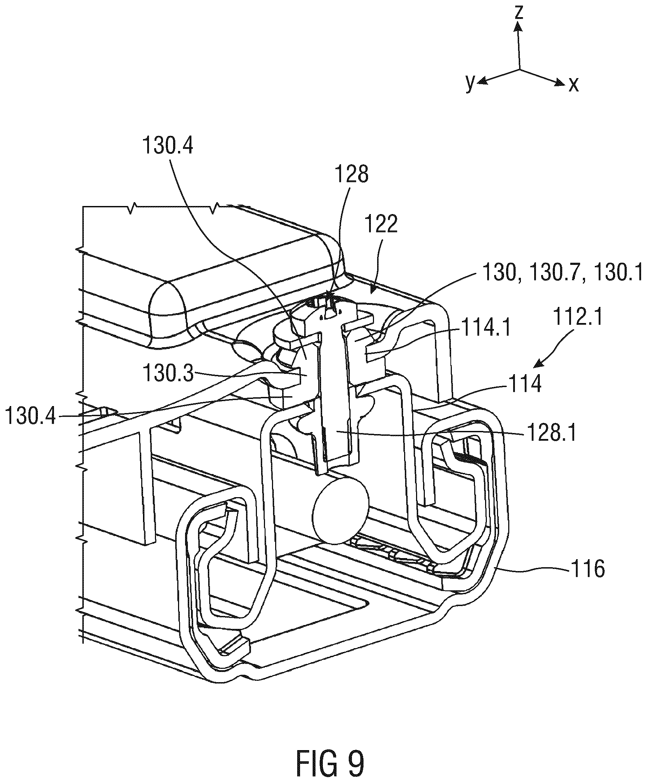

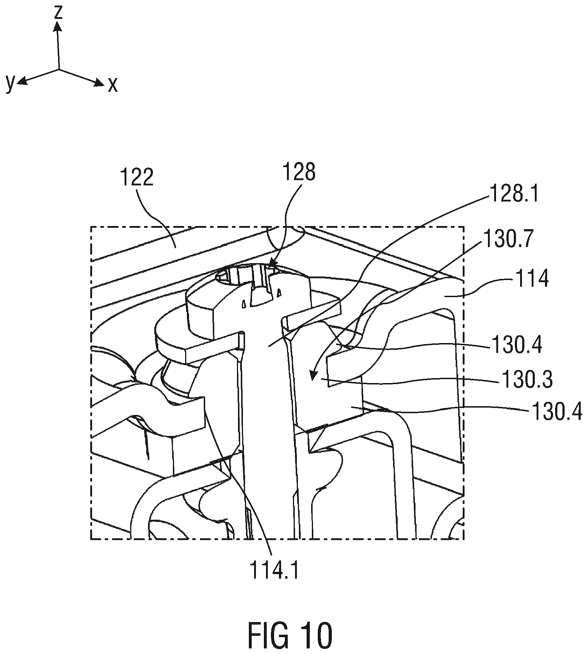

Figur 9 zeigt in perspektivischer Schnittdarstellung eines der Schienenpaare 112.1 im Bereich eines als Schienenentkopplungselement 130.7 ausgebildeten Entkopplungselements 130, das im Befestigungspunkt 128 die bewegliche Oberschiene 114 von der Motorhalterung 122 akustisch entkoppelt. Figur 10 zeigt in vergrößerter perspektivischer Schnittdarstellung das Schienenentkopplungselement 130.7 nach Figur 9.

Im Befestigungspunkt 128 ist die Motorhalterung 122 mittels eines Befestigungselements 128.1, insbesondere einer Schraube, mit der beweglichen Oberschiene 114 verbunden. Zur akustischen Entkopplung von Oberschiene 114 und Motorhalterung 122 ist das Schienenentkopplungselement 130.7 als nachgiebiges oder elastisches Lagerelement 130.1, zum Beispiel aus einem elastischen Kunststoffmaterial oder aus Gummi oder dergleichen, ausgebildet.

Das Schienenentkopplungselement 130.7 ist in einer Befestigungsöffnung 114.1 der Oberschiene 114 für das Befestigungselement 128.1 angeordnet und weist den Führungsabschnitt 130.3 und Entkopplungsabschnitte 130.4 auf.

Jede der hier vorgestellten Entkopplungselemente 130, zum Beispiel die Motorentkopplungselemente 130.5, die Wellenentkopplungselemente 130.6, die Schienenentkopplungselemente 130.7, reduzieren die Lautheit in dem jeweiligen Fahrzeugsitz 100 um circa 0,5 Sone im Vergleich zu Sitzlängsversteller herkömmlicher Bauweise.

Dabei sind die verschiedenen Entkopplungselemente 130, insbesondere die Motorentkopplungselemente 130.5 von den Wellenentkopplungselementen 130.6 und diese Wellenentkopplungselemente 130.6 von den Schienenentkopplungselementen 130.7, voneinander entkoppelt. Mit anderen Worten: Die beispielsweise als Hüllrohre ausgebildeten Wellenentkopplungselemente 130.6 der flexiblen Welle 126 (auch Flexwelle genannt) stehen mit ihren Enden weder in Verbindung mit der Motoreinheit 120 noch mit den Motorentkopplungselementen 130.5 noch mit der Getriebeeinheit 124 und den Schienenentkopplungselementen 130.7. Die Wellenentkopplungselemente 130.6 sind somit ebenfalls komplett über die nachgiebigen Flansche 130.41 von der Motorhalterung 122 und den anderen angrenzenden Bauteilen/Baugruppen entkoppelt.

Die Körperschallanregung der Motoreinheit 120 wird über eine Lagerung des Motors der Motoreinheit 120 in den Entkopplungselementen 130, ausgebildet als nachgiebige Lagerelemente 130.1, zum Beispiel Gummielemente, reduziert. Die Wahl der Shore-Härte und der Dicke des Materials der Entkopplungselemente 130, zum Beispiel eines Elastomers, sind abgestimmt auf die Reduzierung von einwirkenden Frequenzen, insbesondere einwirkenden Körperschall aufgrund von beweglichen Teilen. Sowohl die Entkopplungselemente 130, insbesondere sowohl jene für die Motoreinheit 120 als auch die anderen Entkopplungselemente 130 für die Welle 126 und die Oberschiene 114, vereinen Federeigenschaften und Dämpfungseigenschaften, die optimal auf die auftretenden Schwingungsfrequenzen abgestimmt sind oder werden können.

Die Anzahl der Entkopplungselemente 130 kann in Abhängigkeit von der Größe, insbesondere den Abmessungen, der Längsverstelleinrichtung 110, insbesondere der Welle 126 und deren Länge (auch Flexwellenlänge oder Hüllrohrlänge genannt), variieren. Auch kann ein gebogener Verlauf der Welle 126 oder eines diese umgebenden Hüllrohres zusätzliche Abstützungen über diese nachgiebigen Flansche 130.41 erfordern.

Durch die Kombination der zuvor beschriebenen verschiedenen, als Motorentkopplungselemente 130.5, Wellenentkopplungselemente 130.6 und/oder Schienenentkopplungselemente 130.7 ausgebildeten Entkopplungselemente 130 ist es möglich, die Lautheit der Längsverstelleinrichtung 110 auf kleiner 1,8 Sone am Fahrzeugsitz 100, insbesondere eines aufgepolsterten Sitzes mit Messung der Akustik am Kopf, zu reduzieren.

### Bezugszeichenliste

- 100: Fahrzeugsitz
- 102: Sitzteil
- 104: Rückenlehne
- 106: Beschlag
- 108: Drehachse
- 110: Längsverstelleinrichtung
- 112: Schienenanordnung
- 112.1, 112.2: Schienenpaar
- 114: Erstes Schienenelement (Oberschiene)
- 114.1: Befestigungsöffnung
- 116: Zweites Schienenelement (Unterschiene)

- 120: Motoreinheit
- 122: Motorhalterung
- 122.1: Motoraufnahmeabschnitt
- 122.11: Ausnehmung
- 122.2: Wellenaufnahmeabschnitt
- 122.21: Flanschaufnahme
- 122.3: Übergangsabschnitt
- 124: Getriebeeinheit
- 126: Welle
- 127: Hüllrohr
- 128: Befestigungspunkt
- 128.1: Befestigungselement
- 130: Entkopplungselement
- 130.1: elastisches Lagerelement
- 130.2: dämpfendes Element
- 130.3: Führungsabschnitt
- 130.4: Entkopplungsabschnitt
- 130.41: Flansch
- 130.5: Motorentkopplungselement
- 130.6: Wellenentkopplungselement
- 130.7: Schienenentkopplungselement
- 132: Sitzhalterung
- 134: Motorende
- 136: Versteifungselement
- 138: Befestigungsflansch

- x: Längsrichtung
- y: Querrichtung
- z: Vertikalrichtung

## Patentansprüche

1. Längsverstelleinrichtung (110) für einen Fahrzeugsitz (100), umfassend:
- eine Schienenanordnung (112) mit zwei Schienenpaaren (112.1, 112.2), wobei das jeweilige Schienenpaar (112.1, 112.2) ein erstes Schienenelement (114) und ein zweites Schienenelement (116) aufweist, welche relativ zueinander beweglich sind,
- eine Motoreinheit (120) sowie
- eine Motorhalterung (122) mit einem Motoraufnahmeabschnitt (122.1) für die Motoreinheit (120) und mindestens einem Wellenaufnahmeabschnitt (122.2) für mindestens eine von der Motoreinheit (120) abgehende Welle (126),
wobei zwischen der Motorhalterung (122) und der Motoreinheit (120), zwischen der Motorhalterung (122) und der Welle (126), insbesondere deren Hüllrohr (127), und/oder zwischen der Motorhalterung (122) und einem beweglichen Schienenelement (114) jeweils mindestens ein Entkopplungselement (130) vorgesehen ist.

2. Längsverstelleinrichtung (110) nach Anspruch 1,
wobei das mindestens eine Entkopplungselement (130) zumindest abschnittsweise als ein nachgiebiges Lagerelement (130.1) ausgebildet ist.

3. Längsverstelleinrichtung (110) nach Anspruch 1 oder 2,
wobei das mindestens eine Entkopplungselement (130) wenigstens einen Führungsabschnitt (130.3) und einen Entkopplungsabschnitt (130.4) aufweist.

4. Längsverstelleinrichtung (110) nach Anspruch 3,
wobei der Führungsabschnitt (130.3) als ein Führungsrohr ausgebildet ist.

5. Längsverstelleinrichtung (110) nach Anspruch 3 oder 4,
wobei der Entkopplungsabschnitt (130.4) als ein nachgiebiger Flansch (130.41) ausgebildet ist.

6. Längsverstelleinrichtung (110) nach Anspruch 5,
wobei der nachgiebige Flansch (130.41) als eine rechtwinklig vom Führungsabschnitt (130.3) abstehende Kante ausgebildet ist und sowohl zur Verbindung als auch zur akustischen Entkopplung eingerichtet ist.

7. Längsverstelleinrichtung (110) nach einem der Ansprüche 3 bis 6,
wobei zumindest der Entkopplungsabschnitt (130.4) aus einem elastischen Material gebildet ist.

8. Längsverstelleinrichtung (110) nach einem der vorhergehenden Ansprüche,
wobei mindestens eines der Entkopplungselemente (130) als ein Motorentkopplungselement (130.5), mindestens eines der Entkopplungselemente (130) als ein Wellenentkopplungselement (130.6) und/oder mindestens eines der Entkopplungselemente (130) als ein Schienenentkopplungselement (130.7) ausgebildet sind beziehungsweise ist.

9. Längsverstelleinrichtung (110) nach Anspruch 8,
wobei das/die Motorentkopplungselement/e (130.5), das/die Wellenentkopplungselement/e (130.6) und das/die Schienenentkopplungselement/e (130.7) voneinander entkoppelt sind.

10. Fahrzeugsitz (100) mit einer Längsverstelleinrichtung (110) nach einem der vorhergehenden Ansprüche.
